(19) Europäisches Patentamt
European Patent Office
Office européen des brevets

(11) Numéro de publication: **0 020 661**
**B1**

(12) **FASCICULE DE BREVET EUROPEEN**

(45) Date de publication du fascicule du brevet: **25.05.83**

(51) Int. Cl.³: **C 02 F 1/46,** H 01 M 8/18, C 01 B 11/18, C 02 F 1/00

(21) Numéro de dépôt: **79901665.4**

(22) Date de dépôt: **30.11.79**

(86) Numéro de dépôt international:
**PCT/FR79/00119**

(87) Numéro de publication internationale:
**WO 80/01161 12.06.80 Gazette 80/13**

(54) **PROCEDE DE DESSALEMENT DES EAUX, EN PARTICULIER DE L'EAU DE MER.**

(30) Priorité: **01.12.78 FR 7834004**

(43) Date de publication de la demande:
**07.01.81 Bulletin 81/1**

(45) Mention de la délivrance du brevet:
**25.05.83 Bulletin 83/21**

(84) Etats contractants désignés:
**CH DE GB NL SE**

(56) Documents cités:
**BE - A - 705 135**
**FR - A - 1 304 525**
**FR - A - 1 409 588**
**FR - A - 2 096 563**
**US - A - 3 020 124**
**US - A - 3 493 478**
**US - A - 3 883 412**

(73) Titulaire: **SOCIETE D'ETUDES ET DE RECHERCHES DES SOURCES D'ENERGIE NOUVELLES, (SERSEN)**
**"La Castagne", route de Bullion**
**78830 Bonnelles (FR)**

(72) Inventeur: **DEMAIRE, Georges**
**"La Castagne" route de Bullion**
**78830 Bonnelles (FR)**
Inventeur: **LYS, Jacques**
**15 rue Magenta**
**78000 Versailles (FR)**
Inventeur: **BERGER, Michel**
**Saint-Lambert-des-Bois**
**78470 Saint Rémy les Chevreuse (FR)**

(74) Mandataire: **Du Chaffaut, François et al,**
**c/o Cabinet Harlé & Phélip 21, rue de la Rochefoucauld**
**F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Procédé de dessalement des eaux, en particulier de l'eau de mer

La présente invention concerne le dessalement dex eaux, en particulier de l'eau de mer.

Les procédés généralement mis en oeuvre pour séparer l'eau et les sels minéraux qui s'y trouvent en solution reposent sur des principes divers parmi lesquels, principalement, le changement de phase par congélation ou évaporation, la filtration par électrodialyse ou osmose inverse, etc . . .

Ces procédés présentent, suivant les cas, divers inconvénients. En premier lieu, ils peuvent étre gros consummateurs d'énergie. En outre, s'ils mettent en oeuvre des membranes de filtration, celles-ci doivent pouvoir résister à des pressions élevées, ce qui peut entraîner des difficultés technologiques et limiter la capacité des installations. Enfin, si le dessalement est opéré par distillation, l'eau obtenue après traitment n'est pas de la meilleure qualité, dans la mesure où elle est totalement déminéralisée.

La présente invention se rapporte à la mise en oeuvre d'un procédé de dessalement nouveau faisant apparaître un bilan énergétique particulièrement favorable, d'une mise en oeuvre simple et relativement peu onéreuse par rapport aux procédés habituellement utilisés, produisant des résidus de traitement valorisables dans différents domaines de l'industrie chimique et offrant en définitive à l'utilisateur une eau débarrassée des chlorures dissous.

Le procédé objet de la présente invention consiste en l'oxydation électrochimique, réalisée à froid, des chlorures en solution dans l'eau, suivie d'un traitement chimique destiné à assurer l'élimination des perchlorates résultant de l'opération d'oxydation citée ci-dessus.

L'oxydation électrochimique des chlorures en solution dans l'eau est réalisée au sein d'un générateur électrochimique par l'action d'ions $OH^-$ qui, chargés négativement et au contact d'une molécule de chlorure, par exemple de chlorure de sodium, libèrent une charge électrique négative suivant une réaction du type:

$$ClNa+8OH^- \rightarrow ClO_4Na+4HOH+8e^-$$

Il ressort de cette expression qu'une molécule-gramme, par exemple de chlorure de sodium, est ainsi oxydée en une molécule-gramme de perchlorate de sodium, tandis que 8 électrons-grammes sont libérés à l'anode par l'intermédiaire d'une électrode auxiliaire plongée dans la solution et reliée à un circuit électrique externe. Il est à souligner que cette opération est génératrice d'énergie électrique. La production d'ions $HO^-$ dans la solution à dessaler peut être opérée par des méthodes analogues à celles qui sont mises en oeuvre dans les batteries et générateurs électrochimiques. Une électrode positive (cathode) dont les matières actives sont constituées d'oxyde de nickel, d'oxyde de titane, d'oxyde de cobalt, d'oxyde de fer, ou d'autres oxydes, considérés séparément ou de manière combinée, fournit, après hydroxydation dans un électrolyte alcalin tel qu'une solution de soude ou de protasse, des ions $OH^-$ qui transitent au travers d'un séparateur, membrane perméable aux ions, et atteignent l'anode où se réalise la réaction électrochimique citée ci-dessus.

Différents perfectionnements peuvent être apportés à la méthode générale qui vient d'être décrite. En particulier, l'adjonction à l'électrolyte baignant la cathode de compcsés divers tels que l'hydroxyde de lithium, peut augmenter la conductivité de la solution. Dans tous les cas, la régénération des matières actives constituant la cathode peut être opérée au contact de l'air ambiant ou d'oxygène, ou par oxydation forcée réalisée par insufflation et dissolution dans le compartiment cathodique d'air ou d'oxygène sous pression.

Dans le compartiment anodique circule l'eau à dessaler et qui est mise en contact aussi étroit que possible avec le séparateur où transitent les ions $OH^-$, et avec l'électrode auxiliaire qui assure la collecte des électrons et qui est constituée par exemple de nickel déployé, laminé ou fritté.

L'épuisement de l'eau à dessaler, c'est-à-dire l'oxydation à froid de tous les ions chlore qu'elle contient en solution, peut requérir plusieurs passages successifs sur la même unité ou son passage sur plusieurs unités analogues dans lesquelles s'applique la réaction électrochimique exprimée ci-dessus, l'objectif étant d'offrir la plus grande surface de contact possible entre l'eau à dessaler, les séparateurs et les électrodes auxiliaires mises en oeuvre.

A l'issue de cette réaction, les chlorures en solution sont oxydés à l'état de perchlorates, le plupart de ces composés étant solubles dans les conditions normales de température et de pression.

Le procédé suivant l'invention repose, par ailleurs, sur l'élimination des perchlorates produits au cours de l'opération précédente.

La méthode de dessalement utilisée est fondée en effet sur l'insolubilité du perchlorate de potassium.

L'eau à dessaler, s'il s'agit en particulier d'eau de mer, contient principalement en solution, après le traitement électrochimique décrit ci-dessus, des perchlorates de sodium et de potassium et, à moindres concentrations, des perchlorates de magnésium et de calcium. Le perchlorate de potassium qui a pu se former au cours du traitement électrochimique précédent peut être extrait directement par simple décantation ou filtration, en raison de son insolubilité dans l'eau dans les conditions normales de température et de pression. Si, à la solution à dessaler, on ajoute après le traitement électrochimique

visé ci-dessus un sel de potassium, par exemple du bicarbonate de potassium légèrement en excès, les perchlorates en solution sont décomposés suivant des réactions chimiques du type suivant:

$$ClO_4Na+CO_3HK \rightarrow ClO_4K+CO_3HNa$$

Ces réactions ont un caractère d'irréversibilité très marqué dans la mesure où elles conduisent, par double décomposition, à un composé insoluble: le perchlorate de potassium.

L'élimination des produits insolubles à effectuer après les traitements indiqués ci-dessus peut être opérée par décantation ou filtration ou tout autre procédé permettant d'assurer la séparation des phases en présence. Les opérations d'élimination des ions chlore décrites ci-dessus peuvent être alternées et répétées jusqu'à obtenir une solution suffisamment épurée. En définitive, l'obtention d'une eau déchlorurée est fondée sur la mise en oeuvre d'un générateur électrochimique à eau de mer suivie d'un traitement de la solution par un sel de potassium tel que le bicarbonate de potassium.

L'élimination des ions alcalins et métalliques demeurant en solution peut être, dans une deuxième phase du processus, opérée par un nouveau traitement électrochimique analogue à celui décrit ci-dessus et réalisé par le passage de la solution à l'anode d'un autre générateur électrochimique comportant une source d'ions $OH^-$, un séparateur et une électrode auxiliaire qui assure la collecte des électrons. Ce générateur a pour objet de réaliser l'oxydation électrochimique des sels tels que les bicarbonates alcalins et métalliques demeurant en solution après le traitement chimique décrit ci-cessus, suivant des réactions du type:

$$2CO_3HNa+2OH^- \rightarrow C_2O_6Na_2+2H_2O+2e^-$$

et dans lesquelles les ions $OH^-$ assurent l'oxydation par exemple des bicarbonates sous la forme de perdicarbonates dont la formation s'accompagne de l'apparition d'un précipité séparable par décantation ou filtration.

S'il s'agit de sulfates présents à faible concentration, et initialement contenus dans l'eau de mer, susceptibles d'être formés au cours des traitements précédents, ils sont également précipitables au cours de cette deuxième phase de traitement électrochimique, sous la forme de persulfates décantables et séparables de la solution à dessaler.

La formation de ces différents persels à la cathode du générateur électrochimique et leur précipitation dans la solution à dessaler est d'autant plus rapide que la température est plus faible.

Afin de réduire à des niveaux aussi faibles que possible la consommation de bicarbonate de potassium qui entre dans les opérations de dessalement décrites ci-dessus, le procédé suivant l'invention comporte également, éventuellement, la récupération et le traitement des précipités obtenus après décantation, filtration et séparation des phases en présence. Si le sel de potassium utilisé dans le traitement chimique est du bicarbonate de potassium, les résidus obtenus sont composés principalement, d'une part, de perchlorate de potassium issu de la première phase du processus, d'autre part de percarbonates constitutés dans la deuxième phase du processus.

Le perchlorate de potassium récupéré peut être utilisé directement dans toutes les applications mettant en oeuvre un comburant énergique. Il entre, en particulier, dans la composition des poudres, explosifs et propulseurs d'engins. Il peut également être décomposé par chauffage et par électrolyse, les produits de décomposition obtenus étant eux-mêmes valorisables. Le chauffage d'une solution concentrée de perchlorate conduit en effet à sa décomposition partielle et à la formation de chlorure de potassium, dont l'électrolyse conduit elle-même à la formation de potasse caustique KOH. L'action du gaz carbonique sur la potasse permet d'obtenir le bicarbonate de potassium entrant dans le traitement chimique décrit ci-dessus.

Les persels récupérés par décantation et filtration à l'issue de la deuxième phase du processus de dessalement décrite ci-dessus peuvent également être utilisés pour la formation d'une partie du gaz carbonique nécessaire à la préparation du bicarbonate de potassium entrant dans le traitement chimique décrit antérieurement. La décomposition de perchlorates par chauffage puis action de l'acide chlorhydrique, par exemple, conduit en effet à la formation de gaz carbonique qui peut être combiné à la potasse obtenue par ailleurs.

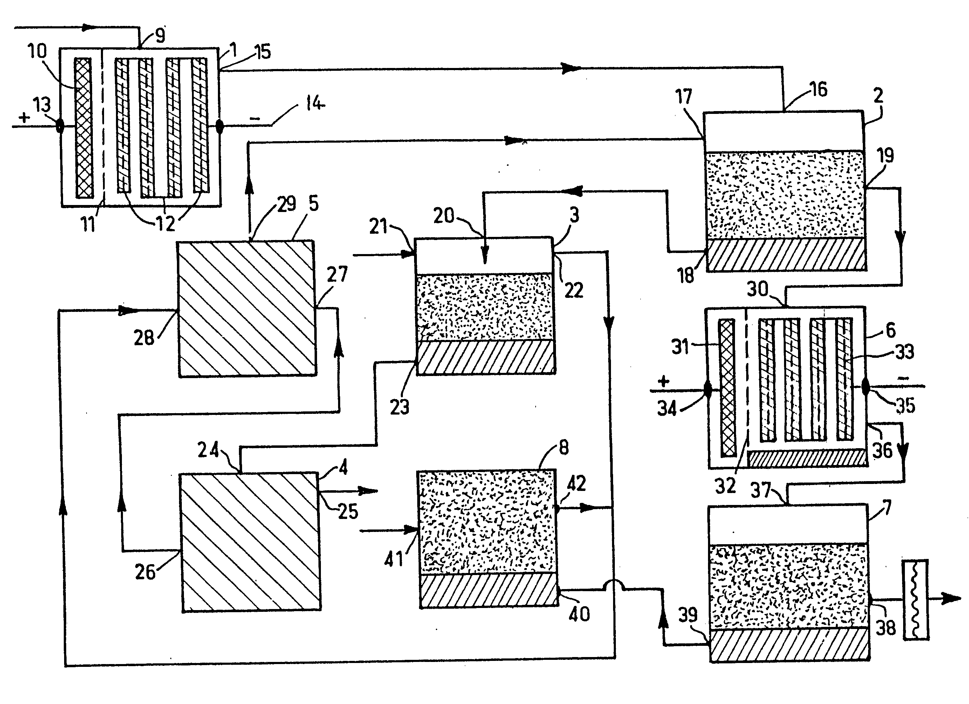

La figure 1 illustre les principes d'organisation du processus de dessalement de l'eau suivant l'invention.

Suivant une application du dispositif correspondant, l'eau de mer à dessaler est introduite en 9 dans la cellule 1 dans laquelle s'effectue l'oxydation électrochimique des chlorures en solution dans l'eau. La cellule 1 comporte une cathode 10 baignant dans un électrolyte alcalin, un séparateur 11, une électrode auxiliaire 12 baignée par la solution à dessaler et assurant la collecte du courant électrique anodique.

Le générateur électrochimique constitué par la cellule 1 délivre à ses bornes 13 et 14 le courant électrique produit. La solution à dessaler est évacuée en 15 de la cellule 1 et éventuellement introduite successivement dans plusieurs cellules identiques à la cellule 1 non représentées sur la figure 1. La solution à dessaler est ensuite introduite en 16 dans la cellule 2 de traitement chimique. Dans la cellule 2 est introduite en 17 une solution concentrée de bicarbonate de potassium. Les précipités issus de la

réaction chimique de double décomposition sont séparés par décantation réalisée en 18 et éventuellement par filtration ou par tout autre procédé de séparation des phases, non représenté sur la figure 1. C'est une eau déchlorurée qui sort en 19 de la cellule 2. Le traitement de récupération du perchlorate de potassium qui constitue le principal composé résiduel obtenu en 18 est effectué comme suit. Le précipité recueilli en 18 est introduit en 20 dans la cellule 3 et traité à l'acide chlorhydrique introduit en 21 dans la cellule 3. Celui-ci assure la décomposition des carbonates et bicarbonates présents dans ce précipité et la formation de gaz carbonique extrait en 22 de la cellule 3. Le perchlorate de potassium et les chlorures résiduels recueillis en 23 dans la cellule 3 sont introduits, pour décomposition par chauffage, dans une cellule non représentée sur la figure 1. Les composés qui en résultent sont introduits ensuite en 24 dans la cellule à électrolyse 4.

Les produits de décomposition par électrolyse sont le chlore et l'acide chlorhydrique récupérés en 25 et, d'autre part, la potasse KOH prélevée en 26 ainsi que divers hydroxydes métalliques insolubles. Après filtration, la potasse KOH est introduite en 27 dans la cellule 5 qui reçoit simultanément en 28 le gaz carbonique extrait en 22 de la cellule 3 et en 42 de la cellule 8. Le bicarbonate de potassium issu en 29 de la cellule 5 est utilisé dans la cellule 2 où il est introduit en 17.

L'eau déchlorurée obtenue en 19 en sortie de la cellule 2 peut être, après décantation et filtration, utilisée en l'état ou, si certains usages spécifiques le nécessitent, être épurée davantage par élimination des ions alcalins et métalliques qui s'y trouvent encore en solution. Cette phase de dessalement complémentaire est réalisée dans la cellule 6, dans laquelle est introduite en 30 la solution à dessaler et qui comporte, comme le générateur électrochimique constituant la cellule 1, une cathode 31 baignant dans un électrolyte alcalin, un séparateur 32, une électrode auxiliaire 33 baignée par la solution à dessaler et assurant la collecte du courant anodique. Le générateur électrochimique constitué par la cellule 6 delivre à ses bornes 34 et 35 le courant électrique produit. La solution à dessaler est évacuée en 36 de la cellule 6 et éventuellement traitée dans plusieurs cellules identiques à la cellule 6 non représentées sur la figure 1. A l'issue de ce traitement, une phase ultime de décantation ou de filtration de la solution est réalisée dans la cellule 7 où la solution est introduite en 37. L'eau dessalée est évacuée en 38 de la cellule 7.

Les persels formés au cours de cette dernière phase du traitement et précipités sont extraits en 39 de la cellule 7 et sont introduits en 40 dans la cellule 8 et traités par chauffage et décomposition à l'acide chlorhydrique introduit en 41.

Le gaz carbonique résultant de leur décomposition est recueilli en 42 et dirigé vers la cellule 5 où s'effectue la synthèse chimique du bicarbonate de potassium utilisé dans le traitement chimique réalisé dans la cellule 2.

C'est en définitive une eau légèrement minéralisée qui peut être obtenue en 38 à la sortie de ce dispositif.

Le procédé suivant l'invention permet de traiter de façon continue des débits d'eau salée importants qui ne sont limités que par la capacité des cellules où sont mises en oeuvre les réactions électrochimiques d'oxydation des sels contenus dans l'eau. Une capacité de traitement de plusieurs dizaines de milliers de $m^3$ par jour d'eau à dessaler peut être réalisée suivant le processus décrit ci-dessus.

Une partie de l'énergie nécessaire au fonctionnement des installations, notamment pour assurer les opérations de chauffage et d'electrolyse ainsi que les opérations de pompage et de transfert des fluides et autres composés, peut être fournie par les générateurs électrochimiques constituant les cellules 1 et 6 de la figure 1. Si l'énergie électrique produite dans celle-ci n'est pas consommée pour couvrir les besoins énergétiques des autres cellules, elle peut, après une conversion appropriée, alimenter un réseau électrique extérieur, les énergies développées se situant autour de 18 à 36 kJ par litre d'eau de mer à dessaler.

En outre, si un appoint de gaz carbonique s'avère nécessaire à différentes étapes du processus, il peut être assuré par combustion de coke ou de tout autre combustible approprié.

Enfin, les résidus obtenus au cours des différentes phases du processus, en particulier le perchlorate de potassium ainsi qui les produits de la décomposition de ces composés par chauffage ou électrolyse, peuvent être valorisés ou traités industriellement à d'autres fins.

En conclusion, le procédé de dessalement de l'eau suivant l'invention permet, dans un première phase du processus, d'obtenir l'élimination des ions chlore en solution. L'eau obtenue est ainsi utilisable pour de nombreux usages agricoles et industriels. Dans une phase complémentaire du processus, on peut obtenir une eau appauvrie en ions sodium, légèrement minéralisée et convenant en définitive à des usages domestiques variés et à la consommation.

**Revendications**

1. Procédé de dessalement de l'eau de mer, des eaux saumâtres ou des saumures, dans lequel:

— on fait circuler l'eau à dessaler dans le compartiment anodique d'un générateur électrochimique principal constitué d'une ou plusieurs unités comportant respectivement une cathode source d'ions $OH^-$ baignant dans un électrolyte, un séparateur et le compartiment anodique dans lequel l'eau à

dessaler circule au contact d'une électrode auxiliaire collectrice de l'énergie électrique produite par le générateur,

— on élimine des chlorates et perchlorates fournis dans le générateur électrochimique principal, par mélange à la solution à dessaler d'un sel de potassium et par décantation, filtration et séparation des composés insolubles obtenus,

— on élimine éventuellement les sels alcalins et métalliques formés dans l'unité d'élimination des chlorates et perchlorates à l'aide d'un ou plusieurs générateurs électrochimiques complémentaires mettant en oeuvre respectivement une cathode source d'ions $OH^-$ baignant dans un électrolyte alcalin, un séparateur et un compartiment anodique dans lequel la solution à dessaler circule au contact d'une électrode auxiliaire collectrice de l'énergie électrique produite par ces générateurs, ainsi que les cellules de décantation, filtration et séparation des composés insolubles obtenus,

— éventuellement on récupère et décompose les divers composés résiduels obtenus au cours des différentes phases du dessalement à l'aide d'une unité auxiliarie assurant également la synthèse du sel de potassium utilisé dans l'unité d'élimination des chlorates et perchlorates.

2. Procédé de dessalement suivant la revendication 1 dans lequel on utilise pour le générateur électrochimique principal et pour le(s) générateur(s) électrochimique(s) complémentaire(s), une cathode constituée d'oxyde de nickel et/ou d'oxyde de titane et/ou d'oxyde de cobalt et/ou d'oxyde de fer hydroxydés et l'une électrode auxiliaire qui assure la collecte des électrons, la cathode étant régénérable par circulation ou mise en solution dans l'électrolyte, d'air ou d'oxygène.

3. Procédé selon la revendication 2, caractérisé en ce qu'on utilise une électrode auxiliaire en nickel déployé, laminé ou fritté.

4. Procédé de dessalement suivant l'une des revendications 1 à 3, dans lequel l'élimination des chlorates et perchlorates formés dans le générateur électrochimique principal est réalisée par mélange à la solution à dessaler d'un sel de potassium.

5. Procédé selon la revendication 4, caractérisé en ce que le sel de potassium utilisé pour l'élimination des chlorates et perchlorate est le bicarbonate de potassium.

6. Procédé de dessalement suivant l'une des revendications 1 à 5, dans lequel la décomposition des persels précipités obtenus est opérée par chauffage et/ou électrolyse et/ou action de l'acide chlorhydrique.

7. Procédé de dessalement suivant l'une des revendications 1 à 6, dans lequel tout ou partie de l'énergie consommée dans les différentes unités est fournie par le générateur électrochimique principal et/ou le(s) générateur(s) électrochimique(s) secondaire(s).

## Claims

1. Process for desalination of sea water, brackish waters and brines, wherein:

— the water to be desalinated is circulated through the anodic compartment of a main electrochemical generator consisting of one or more units respectively including a $OH^-$ ions supply cathode immersed in an electrolyte, a partition and the anodic compartment wherein the water to be desalinated flows in contact with an auxiliary collecting electrode for the electric power produced by the generator.

— the chlorates and perchlorates provided in the main electrochemical generator are removed by mixing a potassium salt with the solution to be desalinated and by settling, filtrating and separating the insoluble compounds obtained.

— the alkaline and metallic salts formed in the unit for removing the chlorates and perchlorates are removed by means of one or several additional electrochemical generators respectively using a $OH^-$ ions, supply cathode immersed in an alkaline electrolyte, a partition and an anodic compartment wherein the solution to be desalinated flows in contact with an auxiliary collecting electrode for the electric power produced by such generators, as well as the cells for settling, filtrating and separating the insoluble compound obtained.

— possibly the various residual compounds obtained during the various desalination stages are recovered and decomposed by means of an auxiliary unit also effecting the synthesis of the potassium salt used in the unit for removing the chlorates and perchlorates.

2. Desalination process according to Claim 1 wherein there is used for the main electrochemical generator and for additional electrochemical generator(s), a cathode consisting of hydroxidized nickel oxide and/or titanium oxide and/or cobalt oxide and/or iron oxide and an auxiliary electrode acting to collect the electrons, the cathode being regenerable by circulating or bringing into solution in the electrolyte, air or oxygen.

3. Process according to Claim 2, characterized in that there is used an auxiliary electrode made of expanded, rolled or sintered nickel.

4. Desalination process according to any of Claims 1 to 3, wherein removal of the chlorates and

perchlorates formed in the main electrochemical generator is effected by mixing a potassium salt with the solution to be desalinated.

5. Process according to Claim 4, characterized in that the potassium salt used for removing the chlorates and perchlorates is potassium bicarbonate.

6. Desalination process according to any of Claims 1 to 5, wherein the decomposition of the precipitated persalts obtained is effected by heating and/or electrolysis and/or action of hydrochloric acid.

7. Desalination process according to any of Claims 1 to 6, wherein the power consumed in the various units is wholly or partly provided by the main electrochemical generator and/or the secondary electrochemical generator(s).

**Patentansprüche**

1. Verfahren zum Entsalzen von Meerwasser, Brackwasser oder Lake, bei dem man

— das zu entsalzende Wasser in der Anodenkammer eines elektrochemischen Hauptgenerators zirkuliert, der aus einer oder mehreren Einheiten besteht, welche jeweils eine in einen Elektrolyten eintauchende Kathode als Quelle für $OH^-$-Ionen, einen Separator und die Anodenkammer aufweisen, in der das zu entsalzende Wasser in Kontakt mit einer Hilfselektrode zirkuliert, die die von dem Generator erzeugte elektrische Energie sammelt,
— die in dem elektrochemischen Hauptgenerator erzeugten Chlorate und Perchlorate durch Vermischen der zu entsalzenden Lösung mit einem Kaliumsalz und Dekantieren, Filtrieren und Abtrennen der erhaltenen unlöslichen Verbindungen abtrennt,
— gegebenenfalls die in der Abtrenneinheit für die Chlorate und Perchlorate gebildeten Alkali- und Metallsalze mit Hilfe eines oder mehrerer elektrochemischer Komplementärgeneratoren abtrennt, die jeweils eine in einen alkalischen Elektrolyten eintauchende Kathode als Quelle für $OH^-$-Ionene, einen Separator und eine Anodenkammer, in der die zu entsalzende Lösung in Kontakt mit einer Hilfselektrode zirkuliert, die die von diesen Generatoren erzeugte Elektrische Energie Sammelt, sowie Zellen zum Dekantieren, Filtrieren und Abtrennen der erhaltenen unlöslichen Verbindungen aufweisen,
— gegebenenfalls die verschiedenen restlichen Verbindungen, die im Laufe der verschiedenen Entsalzungsphasen anfallen, mittels einer Hilfseinheit gewinnt und zersetzt, die gleichzeitig die Synthese des Kaliumsalzes gestattet, das in der Abtrenneinheit für die Chlorate und Perchlorate verwendet wird.

2. Entsalzungsverfahren nach Anspruch 1, in dem man für den elektrochemischen Hauptgenerator und für den oder die elektrochemischen Komplementärgeneratoren eine aus hydroxydiertem Nickeloxid und/oder Titanoxid und/oder Kobaltoxid und/oder Eisenoxid bestehende Kathode und eine Hilfselektrode verwendet, die das Sammeln von Elektronen gestattet, wobei die Kathode dadurch regenerierbar ist, daß man Luft oder Sauerstoff zirkuliert oder in dem Elektrolyten löst.

3. Verfahren nach Anspruch 2, dadurch gekennzeichnet, daß man eine Hilfselektrode aus gestrecktem, laminiertem oder gesintertem Nickel verwendet.

4. Entsalzungsverfahren nach einem der Ansprüche 1 bis 3 in dem man die Abtrennung der in dem elektrochemischen Hauptgenerator gebildeten Chloriate und Perchlorate durch Vermischen der zu entsalzendeen Lösung mit einem Kaliumsalz durch führt.

5. Verfahren nach Anspruch 4, dadurch gekennzeichnet, daß das zum Abtrennen der Chlorate und Perchlorate verwendete Kaliumsalz Kaliumbicarbonat ist.

6. Entsalzungsverfahren nach einem der Ansprüche 1 bis 5, in dem die Zersetzung der erhaltenen ausgefällten Persalze durch Erhitzen und/oder Elektrolyse und/oder Einwirken von Chlorwasserstoffsäure durchgeführt wird.

7. Entsalzungsverfahren nach einem der Ansprüche 1 bis 6, in dem die gesamte oder ein Teil der in den verschiedenen Einheiten verbrauchten Energie durch den elektrochemischen Hauptgenerator und/oder den oder die elektrochemischen Sekundärgeneratoren geliefert wird.